# FASCICULE DE BREVET EUROPEEN

(11) **EP 1 116 606 B1**
(45) Date de publication et mention de la délivrance du brevet: **01.04.2009**
(21) Numéro de dépôt: 01100657.4
(22) Date de dépôt: 11.01.2001
(51) Int. Cl.: B60C 17/06, C08K 3/36, C08K 3/06, C08L 7/00, C08L 9/00

(54) **Composition de caoutchouc utilisable à l'état vulcanisé comme appui de sécurité pour pneumatique et un tel appui**
Im vulkanisierten Zustand als Notlaufring für Reifen geeignete Kautschukzusammensetzung und solch ein Notlaufring
Rubber composition suitable in vulcanised state as safety support for tyre and such a support

(30) Priorité: 12.01.2000 FR 0000426
(43) Date de publication de la demande: 18.07.2001
(73) Titulaire: Société de Technologie Michelin, 63000 Clermont-Ferrand Cedex 09 (FR); Michelin Recherche et Technique S.A., 1763 Granges-Paccot (CH)
(72) Inventeur: Masson, Francois, Greenville, South Carolina 29607 (US); Bataille, Francois, 63450 St-Amand-Tallende (FR); Teisseyre, Serge, 63100 Clermont-Ferrand (FR)
(74) Mandataire: Le Cam, Véronique Marie Christine

(56) Documents cités:
- EP-A- 0 722 977
- EP-A- 0 796 747
- EP-A- 0 824 131
- FR-A- 2 512 037

## Description

La présente invention concerne une composition de caoutchouc, utilisable à l'état vulcanisé comme appui de sécurité destiné à être monté sur une jante de roue à l'intérieur d'une enveloppe de pneumatique, un tel appui pouvant supporter une bande de roulement de ladite enveloppe en cas de chute de pression de gonflage, et un ensemble monté comportant cet appui.

De manière connue, les appuis de sécurité pour pneumatique de véhicule sont destinés à être montés sur une jante à l'intérieur du pneumatique, en vue de pouvoir supporter la bande de roulement de ce pneumatique en cas de perte de pression de gonflage. Ces appuis comportent notamment une base qui est destinée à s'adapter autour de la jante, et un sommet qui est destiné à entrer en contact avec la bande de roulement dans le cas précité et qui laisse une garde par rapport à celle-ci à la pression nominale.

Le document de brevet japonais JP-A-3/82601 présente un tel appui, dont la base et le sommet sont sensiblement cylindriques, et qui comporte en outre un corps annulaire reliant ladite base et ledit sommet.

Ce corps annulaire comporte un élément de support qui est continu circonférentiellement, et qui comprend:
- une pluralité de cloisons s'étendant axialement de part et d'autre dudit plan médian circonférentiel et réparties sur la circonférence dudit appui, et
- des éléments de jonction s'étendant sensiblement circonférentiellement, chaque élément de jonction reliant entre elles les deux extrémités respectives de deux cloisons adjacentes qui sont disposées d'un même côté de l'appui, lesdits éléments de jonction étant disposés successivement de façon alternée de part et d'autre desdites cloisons;
dans lequel les cloisons et éléments de jonction sont sensiblement rectilignes et la différence entre les valeurs maximale et minimale de l'aire d'une section axiale de l'élément de support en fonction de l'azimut, rapportée à la somme de ces mêmes aires est de préférence inférieure à 0,3. En conséquence, en fonction de l'azimut, l'aire d'une section axiale de l'élément de support varie au maximum d'un facteur deux pour procurer une bonne uniformité de capacité de charge et limiter les vibrations lors d'un roulage en appui.

Cet appui est réalisé essentiellement avec un matériau polymérique dur et l'ensemble de l'élément de support est conçu pour pouvoir supporter la charge en compression.

De tels appuis peuvent être réalisés de façon usuelle par injection dans un moule, par exemple.

Le but de la présente invention est de proposer une composition de caoutchouc, utilisable à l'état vulcanisé comme appui de sécurité destiné à être monté sur une jante de roue à l'intérieur d'une enveloppe de pneumatique, qui soit telle que pour ledit appui, la performance d'allégement, à durée de vie en roulage à plat comparable, soit encore améliorée.

A cet effet, une composition de caoutchouc selon l'invention est telle qu'elle comporte (pce: parties en poids pour 100 parties d'élastomère(s) diénique(s)):
- du caoutchouc naturel ou du polyisoprène synthétique, selon une quantité égale ou supérieure à 60 pce,
- plus de 60 pce d'une charge blanche renforçante, et
- de 3 à 8 pce de soufre.

On notera que l'invention concerne aussi bien les compositions de caoutchouc à l'état non vulcanisé qu'à l'état vulcanisé.

L'état de la technique relatif aux compositions de caoutchouc en tant que telles est notamment constitué par les documents EP-A-0 824 131 et FR-A-2 512 037 cités dans le rapport de recherche européenne. Aucun de ces documents ne décrit une composition de caoutchouc à base de caoutchouc naturel (ou polyisoprène synthétique) comportant un taux aussi élevé de charge blanche renforçante telle que silice combiné à une forte teneur en soufre. Au contraire, les élastomères préférentiels préconisés sont des élastomères synthétiques du type BR ou SBR, donc autres que du caoutchouc naturel, les taux de soufre y sont conventionnels, toujours inférieurs à 3 pce.

Concernant ledit ou lesdits élastomères, on entend de manière connue par élastomère diénique un élastomère issu au moins en partie (i.e. un homopolymère ou un copolymère) de monomères diènes (monomères porteurs de deux doubles liaisons carbone-carbone, conjuguées ou non).

A titre préférentiel, on notera que ledit ou lesdits élastomères sont constitués d'au moins un élastomère diénique essentiellement insaturé.

On entend par élastomère diénique essentiellement insaturé un élastomère diénique qui est issu au moins en partie de monomères diènes conjugués ayant un taux de motifs ou unités d'origine diénique (diènes conjugués) qui est supérieur à 15 % (% en moles), et par exemple:
a) tout homopolymère obtenu par polymérisation d'un monomère diène conjugué, tel que le 1, 3-butadiène, le 2-méthyl 1, 3-butadiène (ou isoprène), les 2, 3-di (alcoyle en C1 à C5) 1, 3-butadiène tels que par exemple le 2, 3 diméthyl-1, 3-butadiène, le 2, 3-diéthyl-1, 3-butadiène, le 2-méthyl 3-éthyl 1, 3-butadiène, le 2-méthyl 3-isopropyl 1, 3-butadiène, le phényl 1, 3-butadiène.
b) tout copolymère obtenu par copolymérisation d'un ou plusieurs diènes conjugués entre eux ou avec un ou plusieurs composés vinylaromatiques, tels que le styrène, l'ortho-, para-, ou le meta-méthylstyrène. On peut par exemple citer les copolymères de butadiène-styrène, ou les copolymères de butadiène-isoprène.

Selon un exemple de réalisation de l'invention, ladite composition comprend également, selon une quantité inférieure ou égale à 40 pce, un homopolymère obtenu par polymérisation d'un monomère diène conjugué ayant de 4 à 12 atomes de carbone, ou un copolymère obtenu par copolymérisation d'un ou plusieurs diènes conjugués entre eux ou avec un ou plusieurs composés vinylaromatiques ayant de 8 à 20 atomes de carbone.

Ladite composition comprend alors par exemple un coupage de caoutchouc naturel et de polybutadiène.

Selon un autre exemple de réalisation de l'invention, ladite composition comprend un seul élastomère diénique constitué de caoutchouc naturel ou de polyisoprène synthétique.

On entend par charge blanche renforçante une charge blanche capable de renforcer à elle seule, sans autre moyen intermédiaire qu'un agent de liaison charge blanche / élastomère(s), une composition de caoutchouc destinée à la fabrication de pneumatiques, en d'autres termes capable de remplacer dans sa fonction de renforcement une charge conventionnelle de noir de carbone de grade pneumatique.

Une telle charge blanche renforçante peut par exemple être constituée de silice, et elle est avantageusement présente dans ladite composition selon une quantité comprise entre 60 et 80 pce et, à titre encore plus préférentiel, selon une quantité comprise entre 65 et 75 pce.

A titre de silice susceptible d'être utilisée, conviennent toutes les silices précipitées ou pyrogénées connues de l'homme de l'art, dont les valeurs de surface BET ou CTAB appartiennent toutes deux à un domaine allant de 50 m²/g à 200 m²/g, les silices précipitées hautement dispersibles étant préférées.

Par silice hautement dispersible, on entend toute silice ayant une aptitude très importante à la désagglomération et à la dispersion dans une matrice élastomérique, observable de manière connue par microscopie électronique ou optique, sur coupes fines. Comme exemples non limitatifs de telles silices hautement dispersibles utilisables pour l'invention, on peut par exemple citer les silices BV 3370 et BV 3380 de la société Degussa, les silices Zeosil 1165 MP et 1115 MP de la société Rhodia, la silice BXR 160 de la société PPG, ou la silice Zeopol 8745 M de la Société Huber.

De préférence, on utilise une silice dont les valeurs de surface BET ou CTAB sont toutes deux comprises entre 110 et 200 m²/g et, à titre encore plus préférentiel, entre 140 et 195 m²/g.

L'état physique de la silice est indifférent, que ce soit sous forme de poudre, de microperles, de granulés, de billes.

Bien entendu, par silice, on entend également des coupages de différentes silices. La silice peut être utilisée seule ou en présence d'autres charges blanches. La valeur de la surface spécifique CTAB est déterminée selon la méthode de la norme NFT 45007 de novembre 1987. La valeur de la surface spécifique BET est déterminée selon la méthode de BRUNAUER, EMMET et TELLER qui est décrite dans "The Journal of the American Chemical Society, vol. 80, p. 309 (1938)", correspondant à la norme NFT 45007 de novembre 1987.

A titre de charge blanche renforçante, on peut également utiliser, à titre non limitatif,
- des alumines (de formule Al₂O₃), telles que les alumines à dispersibilité élevée qui sont décrites dans le document de brevet européen EP-A-810 258, ou encore
- des hydroxydes d'aluminium, tels que ceux décrits dans le document de brevet international WO-A-99/28376.

On notera que la composition de l'invention pourrait comprendre du noir de carbone en plus de ladite charge blanche renforçante, par exemple sous forme d'un coupage noir de carbone / silice.

La composition de caoutchouc selon l'invention comprend en outre de manière classique un agent de liaison charge blanche renforçante / élastomère(s) (encore appelé agent de couplage), qui a pour fonction d'assurer une liaison (ou couplage) suffisante, de nature chimique et/ou physique, entre ladite charge blanche et ledit ou lesdits élastomères, tout en facilitant la dispersion de cette charge blanche au sein de celui-ci ou de ceux-ci.

Un tel agent de liaison, au moins bifonctionnel, a par exemple comme formule générale simplifiée « Y-T-X », dans laquelle:
- Y représente un groupe fonctionnel (fonction « Y ») qui est capable de se lier physiquement et/ou chimiquement à la charge blanche, une telle liaison pouvant être établie, par exemple, entre un atome de silicium de l'agent de couplage et les groupes hydroxyle (OH) de surface de la charge (par exemple les silanols de surface lorsqu'il s'agit de silice);
- X représente un groupe fonctionnel (« fonction X ») qui est capable de se lier physiquement et/ou chimiquement à l'élastomère, par exemple par l'intermédiaire d'un atome de soufre;
- T représente un groupe hydrocarboné permettant de relier Y et X.

Ces agents de liaison ne doivent en particulier pas être confondus avec de simples agents de recouvrement de la charge considérée lesquels, de manière connue, peuvent comporter la fonction Y active vis-à-vis de la charge, mais sont dépourvus de la fonction X active vis-à-vis de l'élastomère.

De tels agents de liaison, d'efficacité variable, ont été décrits dans un très grand nombre de documents et sont bien connus de l'homme du métier. On peut utiliser en fait tout agent de liaison connu pour ou susceptible d'assurer efficacement, dans les compositions de caoutchouc diénique utilisables pour la fabrication de pneumatiques, la liaison entre silice et élastomère diénique, tels que par exemple des organosilanes, notamment des alkoxysilanes polysulfurés ou des mercaptosilanes.

On utilise en particulier des alkoxysilanes polysulfurés, tels que décrits par exemple dans les documents de brevet US-A-3 842 111, US-A-3 873 489, US-A-3 978 103, US-A-3 997 581, US-A-4 002 594 ou, plus récemment, US-A-5 580 919, US-A-5 583 245, US-A-5 663 396, US-A-5 684 171, US-A-5 684 172, US-A-5 696 197, qui décrivent en détail de tels composés connus.

Conviennent en particulier pour la composition de l'invention, sans que la définition ci-après soit limitative, des alkoxysilanes polysulfurés dits « symétriques » répondant à la formule générale (I) suivante:

(I) Z - A - Sₙ - A - Z,

dans laquelle:
- n est un entier de 2 à 8 (de préférence de 2 à 5);
- A est un radical hydrocarboné divalent (de préférence des groupements alkylène en C₁-C₁₈ ou des groupements arylène en C₆-C₁₂, plus particulièrement des alkylènes en C₁-C₁₀, notamment en C₂-C₄, en particulier le propylène);
- Z répond à l'une des formules ci-après: 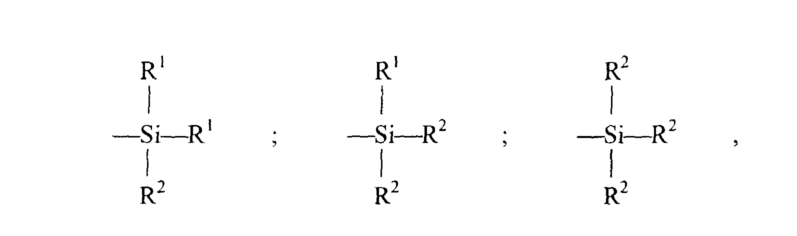 dans lesquelles:
- les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle);
- les radicaux R², substitués ou non substitués, identiques ou différents entre eux, représentent un groupe alkoxyle en C₁-C₁₈ ou cycloalkoxyle en C₅-C₁₈ (de préférence des groupes alkoxyle en C₁-C₈ ou cycloalkoxyle en C₅-C₈, plus particulièrement le méthoxyle et/ou l'éthoxyle.

Dans le cas d'un mélange d'alkoxysilanes polysulfurés répondant à la formule (I) ci-dessus, notamment des mélanges usuels disponibles commercialement, on comprendra que la valeur moyenne des « n » est un nombre fractionnaire, de préférence pouvant varier de 2 à 5.

Comme alkoxysilanes polysulfurés, on citera plus particulièrement les polysulfures (notamment les tétrasulfures) de bis(alkoxyl(C₁-C₄)-silylpropyl), notamment de bis(trialkoxyl(C₁-C₄)-silylpropyl), en particulier les polysulfures de bis(3-triméthoxysilylpropyl) ou de bis(3-triéthoxysilylpropyl). Parmi ces composés, on utilise de préférence le tétrasulfure de bis(3-triéthoxysilylpropyl), en abrégé TESPT, de formule [(C₂H₅O)₃Si(CH₂)₃S₂]₂, commercialisé par exemple par la société Degussa sous la dénomination Si69 (ou X50S lorsqu'il est supporté à 50 % en poids sur du noir de carbone), ou encore par la société Witco sous la dénomination Silquest A1289.

L'homme du métier saura ajuster la teneur en agent de couplage dans les compositions de l'invention, en fonction de l'application visée, du ou des élastomères utilisés et de la quantité de charge blanche renforçante utilisée.

Dans les compositions de caoutchouc conformes à l'invention, la teneur pondérale en agent de couplage peut être comprise dans un domaine de 2 à 15 % par rapport à la masse de charge blanche renforçante et, préférentiellement, dans un domaine de 5 à 12 %.

Concernant le taux de soufre dans la composition selon l'invention, on notera à titre préférentiel qu'il peut varier de 4 à 6 pce.

Les compositions de caoutchouc conformes à l'invention contiennent, outre ledit ou lesdits élastomères, ladite charge blanche renforçante, le soufre et un ou des agents de liaison charge blanche renforçante/ élastomère(s), tout ou partie des autres constituants et additifs habituellement utilisés dans les mélanges de caoutchouc, comme des plastifiants, pigments, antioxydants, des accélérateurs de vulcanisation, des huiles d'extension, un ou des agents de recouvrement de la charge blanche renforçante, tels que des alcoxysilanes, polyols, amines, etc...

Selon une autre caractéristique de l'invention, ladite composition de caoutchouc présente un module d'élasticité M10 à 10 % de déformation qui est supérieur à 10 MPa, avantageusement supérieur à 12 MPa, et qui est de préférence compris entre 13 et 20 MPa.

La composition de caoutchouc vulcanisée selon l'invention est préparée en utilisant trois étapes de préparation successives selon une procédure bien connue de l'homme du métier :
- une première étape de travail ou malaxage thermo-mécanique (parfois qualifiée d'étape "non-productive") à haute température, jusqu'à une température maximale comprise entre 130°C et 200°C, de préférence entre 145°C et 185°C, au cours de laquelle on introduit par exemple, dans un mélangeur approprié tel qu'un mélangeur interne usuel, tous les constituants nécessaires y compris le système de couplage selon l'invention, les éventuels agents de recouvrement ou de mise en oeuvre complémentaires et autres additifs divers, à l'exception du système de vulcanisation;
- une seconde étape de travail mécanique (parfois qualifiée d'étape "productive") à plus basse température, typiquement inférieure à 120°C, par exemple entre 60°C et 100°C, phase de finition au cours de laquelle est incorporé le système de réticulation ou vulcanisation; de telles étapes ont été décrites par exemple dans le document de brevet EP-A-0 501 227, et
- une troisième étape de vulcanisation du mélange obtenu au terme de la seconde étape.

Un appui de sécurité selon l'invention est tel qu'il est constitué par ladite composition de caoutchouc de l'invention.

Cet appui selon l'invention est par exemple du type comportant:
- une base sensiblement cylindrique destinée à s'adapter autour de la jante,
- un sommet sensiblement cylindrique destiné à entrer en contact avec la bande de roulement de l'enveloppe en cas de chute de pression, et laissant une garde par rapport à ladite bande à la pression nominale, et
- un corps annulaire reliant ladite base et ledit sommet entre eux, ledit corps comportant un élément de support continu circonférentiellement avec un plan médian circonférentiel, ledit élément de support comprenant une pluralité de cloisons s'étendant axialement de part et d'autre dudit plan médian circonférentiel et réparties sur la circonférence dudit appui.

Selon un premier mode de réalisation de cet exemple d'appui selon l'invention, ledit corps annulaire comprend également en l'un desdits côtés de l'appui des éléments de jonction s'étendant sensiblement circonférentiellement, chaque élément de jonction reliant entre elles les extrémités respectives de deux cloisons adjacentes qui sont disposées dudit côté de l'appui, lesdits éléments de jonction étant disposés successivement de façon alternée de part et d'autre desdites cloisons.

Dans ce premier mode, lesdits éléments de jonction sont mutuellement épaulés, entre deux cloisons adjacentes, par une nervure s'étendant dudit sommet à ladite base de l'appui, de telle manière que lesdits éléments de jonction forment une paroi de jonction continue en forme de soufflet sur tout ledit côté dudit appui.

Plus précisément, ladite paroi de jonction comporte une pluralité d'alvéoles qui sont chacune délimitées par deux nervures adjacentes, le fond de chaque alvéole présentant sensiblement une forme de dièdre dont l'arête est formée par l'une desdites cloisons et dont les faces sont respectivement formées par lesdits éléments de jonction alternés.

Selon un second mode de réalisation de cet exemple d'appui selon l'invention, ledit corps annulaire comprend également, des deux côtés de l'appui, des éléments de jonction s'étendant sensiblement circonférentiellement, chaque élément de jonction reliant entre elles les deux extrémités respectives de deux cloisons adjacentes qui sont disposées d'un même côté de l'appui, lesdits éléments de jonction étant disposés successivement de façon alternée de part et d'autre desdites cloisons.

Dans ce second mode, lesdites cloisons sont adaptées dans leur partie centrale relativement à leurs extrémités latérales pour renforcer la résistance à un flambement sous un chargement radial du corps annulaire.

En effet, la partie centrale des cloisons de l'élément de support est éloignée des éléments de jonction et peut être détruite en cours de roulage en appui par apparition d'une déformation répétée de flambement. Dans le cas d'appuis réalisés essentiellement avec un matériau élastomérique, une telle déformation répétée de flambement entraîne en roulage une initiation et une propagation de fissures du côté des parois en extension. En revanche, dans le cas des appuis réalisés essentiellement avec des matériaux plastiques, une déformation de flambement entraîne l'apparition de déformations plastiques. Ces déformations irréversibles réduisent de façon importante la raideur de la structure, sa capacité de charge et la rendent progressivement inapte à remplir sa fonction.

Le rapport entre l'épaisseur des cloisons dans leur partie centrale et leurs extrémités latérales est supérieur à 1,1 et de préférence supérieur à 1,5. Cette variation d'épaisseur renforce très sensiblement la résistance au flambement de la partie centrale des cloisons et permet ainsi, à charge radiale donnée, de limiter l'épaisseur des éléments de jonction et d'alléger le poids total de l'appui.

Ces cloisons présentent, d'une extrémité latérale à l'autre, au moins une inversion et, de préférence, trois inversions du sens de leur courbure.

Ces cloisons présentent par exemple une partie centrale s'étendant sensiblement axialement entre deux parties latérales, ces parties latérales rejoignant les éléments de jonction en faisant avec la direction circonférentielle un angle γ allant de 20 à 40 degrés.

Selon un autre exemple de réalisation, les cloisons présentent, dans leur zone centrale, deux parties s'étendant sensiblement axialement et décalées circonférentiellement l'une par rapport à l'autre, ainsi qu'une troisième partie de jonction. La variation α d'orientation moyenne entre cette troisième partie de jonction et les deux parties d'orientation sensiblement axiale est de préférence supérieure à 20 degrés.

Chaque élément de jonction peut être épaulé, d'un seul côté ou des deux côtés de l'élément de support, par au moins une paroi s'étendant sensiblement axialement vers l'extérieur du corps annulaire.

Ces parois axiales sont peu sensibles au flambement car elles sont solidaires de l'élément de support et relativement courtes. Ces parois axiales permettent, à iso-largeur d'appui, de réduire la largeur de l'élément de support et donc d'augmenter sa résistance au flambement.

Dans un mode de réalisation préférentiel, chaque élément de jonction forme avec une paroi axiale qui l'épaule et les extrémités latérales des deux cloisons adjacentes un ensemble en forme d'étoile à trois branches, et la largeur axiale d'une paroi axiale est inférieure ou égale à la moitié de la largeur axiale des deux cloisons adjacentes de l'élément de support.

Les éléments de support selon l'invention peuvent aussi comporter un voile sensiblement cylindrique et coaxial avec l'appui, qui par exemple est disposé radialement à mi-hauteur de l'élément de support.

Ce voile est réalisé dans le même matériau que le reste du corps annulaire. Il permet, lorsqu'il est disposé à mi-hauteur, de diviser par deux la hauteur des cloisons et ainsi d'augmenter d'un facteur quatre, environ, la charge limite de flambement.

Pour faciliter la réalisation des appuis selon l'invention, les différentes géométries des éléments de support sont adaptées pour ne comprendre aucune partie en contre-dépouille s'opposant à un démoulage axial de l'appui.

A titre préférentiel, un ensemble monté selon la présente invention pour véhicule automobile est du type comportant une jante de roue, une enveloppe de pneumatique montée sur ladite jante et ledit appui selon l'invention, ladite jante comportant en chacun de ses deux bords périphériques un siège de jante destiné à recevoir un bourrelet de ladite enveloppe, ladite jante comportant entre ses deux sièges, d'une part, une portée et, d'autre part, une gorge de montage reliant ladite portée à un rebord axialement interne de l'un desdits sièges, ou premier siège.

On notera que la structure plate qui est conférée à ladite jante par ladite portée est telle que, en roulage à plat, toute la largeur de l'appui supporte la charge, contrairement à des jantes dites « creuses ».

Les caractéristiques précitées de la présente invention, ainsi que d'autres, seront mieux comprises à la lecture de la description suivante de plusieurs exemples de réalisation de l'invention, donnés à titre illustratif et non limitatif, en comparaison d'autres exemples non conformes à l'invention.

Les trois modes de réalisation précités concernant des exemples d'architecture d'appui selon l'invention seront par ailleurs décrits ci-après au moyen des dessins annexés, dans lesquels:
- la Fig. 1 est une vue de côté d'un appui de sécurité selon un exemple de réalisation de l'invention,
- la Fig. 2 est une vue en coupe axiale d'un ensemble monté selon l'invention, dans lequel l'appui de la Fig. 1 est monté sur une jante de roue et se trouve en position d'appui contre une enveloppe de pneumatique,
- la Fig. 3 est une vue en coupe, selon la ligne AA de la Fig. 1, d'un élément de support selon un premier mode de réalisation de l'invention,
- la Fig. 4 est une vue en coupe, selon la ligne AA de la Fig. 1, d'un élément de support selon un second mode de réalisation de l'invention qui comporte des cloisons reliées par des éléments de jonction circonférentiels alternés,
- la Fig. 5, similaire à la Fig. 4, est une vue en coupe, selon la ligne AA de la Fig. 1, d'un élément de support dont les cloisons ont une épaisseur variable,
- la Fig. 6, similaire à la Fig. 4, est une vue en coupe, selon la ligne AA de la Fig. 1, d'un élément de support dont les cloisons comportent une partie centrale de liaison qui est orientée circonférentiellement,
- la Fig. 7, similaire à la Fig. 4, est une vue en coupe, selon la ligne AA de la Fig. 1, d'un élément de support dont les éléments de jonction circonférentiels ont une longueur variable,
- la Fig. 8, similaire à la Fig. 4, est une vue en coupe, selon la ligne AA de la Fig. 1, d'un élément de support dont les cloisons présentent trois inversions de courbure dans leur largeur,
- la Fig. 9, similaire à la Fig.4, est une vue en coupe, selon la ligne AA de la Fig. 1, d'un corps annulaire incluant un autre mode de réalisation d'un élément de support dont les cloisons présentent trois inversions de courbure dans leur largeur,
- les Figs. 10 et 11, similaires à la Fig. 4, sont respectivement des vues en coupe, selon la ligne AA de la Fig. 1, de corps annulaires selon l'invention incluant des éléments de support dont les cloisons ont des épaisseurs variables, et avec des parois axiales d'épaulement,
- la Fig. 12 est une vue de côté d'un appui selon ledit second mode de réalisation de l'invention dont le corps annulaire comprend un voile central, et
- la Fig. 13 est une vue en perspective illustrant une architecture d'appui connue.

Dans ces exemples, on a procédé à des tests de roulage à plat d'appuis selon l'invention et d'appuis « témoin » qui diffèrent les uns des autres, d'une part, par la composition de caoutchouc les constituant et, d'autre part, par l'architecture choisie pour ces appuis.

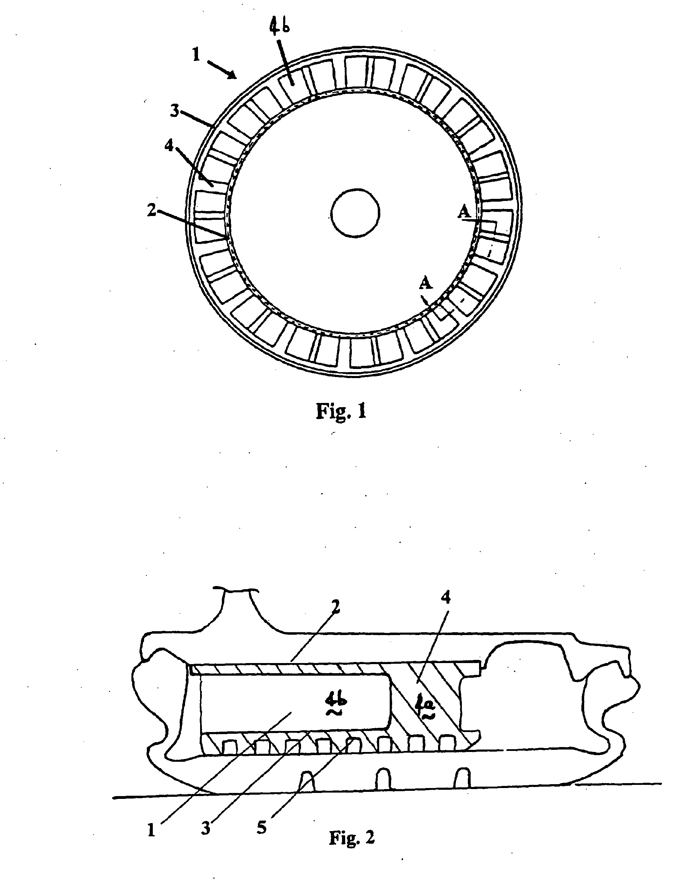

En référence aux Figs. 1 et 2, chacun des appuis 1 testés comprend essentiellement trois parties:
- une base 2, de forme généralement annulaire;
- un sommet 3, sensiblement annulaire, avec sur sa paroi radialement extérieure (de façon optionnelle) des rainures longitudinales 5, et
- un corps annulaire 4 de liaison entre la base 2 et le sommet 3.

La Fig. 2 illustre notamment la fonction d'un appui 1 qui est de supporter la bande de roulement du pneumatique en cas de forte perte de pression de gonflage de celui-ci.

Chacun de ces appuis testés a été intégré à un ensemble monté prévu pour pouvoir équiper un véhicule automobile commercialisé sous la dénomination « PEUGEOT 806 ».

On a utilisé pour la jante de cet ensemble monté une jante telle que celle qui est visible à la Fig. 2. laquelle a été décrite ci-dessus en référence à l'ensemble monté préférentiel de l'invention (cette jante est également décrite en détail dans le document de brevet français FR-A-2 720 977).

Plus précisément, les dimensions caractéristiques de chaque ensemble monté testé (respectivement largeur d'enveloppe- diamètre d'enveloppe - diamètre de jante) sont, en mm:
205 - 650 - 440.

Quant aux dimensions caractéristiques en mm de chaque appui testé (respectivement largeur - diamètre intérieur - hauteur), elles sont de 135 - 440 - 50.

Pour chaque test de roulage à plat (tests témoin et selon l'invention), on a veillé à obtenir un même écrasement relatif de l'appui dans la direction radiale de ce dernier (cet écrasement relatif constant étant défini comme le rapport de la flèche sur la hauteur de l'appui).

Les conditions de roulage étaient les suivantes pour chacun de ces tests:
- charge sur la roue: 530 kg;
- vitesse de roulage: 100 km/h;
- température de roulage: entre 20° C et 25° C.
- roulage sur un circuit de type autoroutier.

### EXEMPLES TEMOIN:

### 1) Exemple témoin 1:

Un premier appui témoin qui a été intégré à l'ensemble monté précité en vue du test de roulage à plat est constitué d'une composition de caoutchouc vulcanisée telle que définie ci-dessous:
- élastomère: caoutchouc naturel 100 pce;
- charge renforçante: silice « ZEOSIL 1165 MP » 54 pce
   (silice commercialisée par la société Rhodia et présentant des valeurs de surfaces BET et CTAB d'au moins 150 à 160 m²/g);
- agent de couplage: « Si69/noir de carbone N330 8,5 pce;
   (dont 4,25 pce de Si69 et 4,25 pce de noir de carbone N330);
- « 6PPD »: 2 pce;
- ZnO: 4 pce;
- acide stéarique: 1 pce;
- accélérateur de vulcanisation: « CBS »: 3 pce;
- soufre: 4,5 pce;
où la « 6PPD » est la N-(1,3-diméthyl butyl)-N'-phényl-p-phénylènediamine, où la « CBS » est la N-cyclohexyl-benzothiazyl-sulfénamide.

Ce premier appui témoin est caractérisé par un module d'élasticité M10 égal à 9 MPa (M10 étant l'abréviation usuelle qui désigne un module d'extension sécant obtenu à une déformation de l'ordre de 10 %, à température ambiante et au troisième cycle de sollicitation, selon la norme ISO 37-1977).

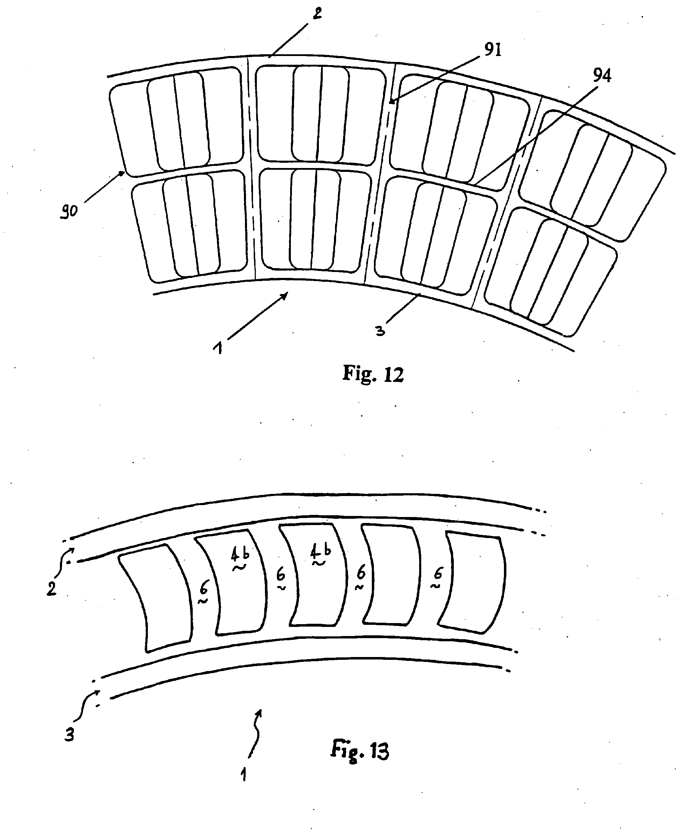

Cet appui présente une architecture connue, qui est illustrée à la Fig. 13, en relation avec les Figs. 1 et 2.

La coupe de la Fig. 2 montre une première partie massive 4a du corps annulaire 4 ainsi qu'une seconde partie 4b constituée d'évidements (voir également Fig. 1) s'étendant axialement sur sensiblement plus de la moitié du corps annulaire 4, en débouchant du côté extérieur dans une direction sensiblement axiale. Ces évidements 4b sont régulièrement répartis sur toute la circonférence du corps annulaire 4 et ils définissent des cloisons 6, lesquelles assurent une liaison radiale directe entre le sommet 2 et la base 3 de l'appui 1.

Cette géométrie a l'avantage de solliciter en flexion et non en compression ces cloisons 6 lorsqu'elles sont écrasées. Les évidements 4b et donc les cloisons 6 sont suffisamment nombreux pour procurer un support régulier lors du roulage sous appui.

Plus précisément, ce premier appui témoin 1 qui a été testé comporte, sur sa circonférence, 38 cloisons 6 qui présentent chacune une épaisseur de 18 mm, et qui sont deux à deux distantes de 38 mm.

De plus, la base 2 et le sommet 3 présentent des épaisseurs qui sont respectivement égales à 7 mm et à 8 mm. Quant au corps annulaire 4 de ce premier appui témoin 1. il présente une largeur (dans la direction axiale) égale à 35 mm.

La masse de ce premier appui témoin est de 8 kg.

Les résultats de roulage dans les conditions précitées, pour ledit ensemble monté comportant ce premier appui témoin, ont établi une durée de vie supérieure à 200 km.

### 2) Exemple témoin 2:

Un second appui témoin qui a été intégré à l'ensemble monté précité en vue du test de roulage à plat est constitué d'une composition de caoutchouc vulcanisée qui se différencie uniquement de celle du premier appui témoin, en ce qu'elle comprend un coupage de caoutchouc naturel (60 pce) et de polybutadiène (40 pce), l'architecture, les dimensions et la masse de cet appui étant identiques à celle dudit premier appui témoin.

Ce second appui témoin est caractérisé par des valeurs sensiblement identiques de module M10, par rapport audit premier appui témoin.

Les résultats de roulage dans les conditions précitées, pour cet ensemble monté incluant ce second appui témoin, ont également établi une durée de vie supérieure à 200 km.

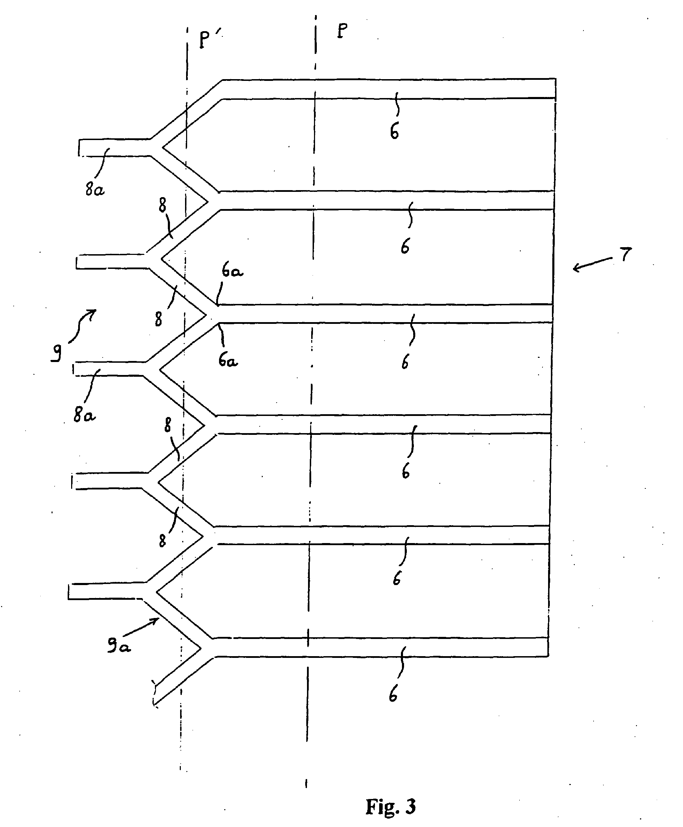

On a par ailleurs testé d'autres appuis témoin qui sont constitués de compositions témoin selon lesdits exemples témoin 1 ou 2, mais qui présentent une architecture telle que celle décrite ci-après en référence aux Figs. 3 à 12. Les résultats de roulage dans les conditions précitées ont établi dans ce cas une durée de vie inférieure à 100 km.

### EXEMPLES D'APPUIS SELON L'INVENTION:

On a testé une série d'appuis selon l'invention, tous les appuis étant constitués d'une même composition de caoutchouc vulcanisée et présentant respectivement des architectures qui sont illustrées aux Figs. 3 à 12.

Pour des raisons de clarté de la présente description, ces architectures testées d'appui seront présentées à la fin de ladite description.

Chaque appui selon l'invention est caractérisé par la formulation suivante pour la composition de caoutchouc vulcanisée qui le constitue:
- élastomère: caoutchouc naturel 100 pce;
- charge renforçante: silice « ZEOSIL 1165 MP » 70 pce;
- agent de couplage: « Si69/noir de carbone N330 11 pce;
   (dont 5,5 pce de Si69 et 5,5 pce de noir de carbone N330);
- « 6PPD »: 2 pce;
- ZnO: 4 pce;
- acide stéarique: 1 pce;
- accélérateur de vulcanisation: « CBS »: 3 pce;
- soufre: 4,5 pce;

Avantageusement, chaque appui de l'invention présente une masse de 5 kg qui est sensiblement réduite d'un tiers, par rapport à la masse égale à 8 kg de chacun des appuis témoin. On notera par conséquent qu'un tel appui selon l'invention présente une masse réduite par rapport à celles desdits appuis « témoin ».

De plus, les résultats de roulage dans les conditions précitées, pour des ensembles montés incluant respectivement les appuis selon l'invention, ont également établi une durée de vie supérieure à 200 km.

Additionnellement, chaque appui selon l'invention est caractérisé par un module M10 égal à 16 MPa, module plus élevé que ceux desdits appuis « témoin ».

On notera que la charge blanche renforçante, telle que la silice, qui est utilisée dans la composition de caoutchouc de chaque appui selon l'invention, procure à cette composition, d'une part, une aptitude à la mise en oeuvre à cru améliorée et, d'autre part, des propriétés à cuit également améliorées, telles que la cohésion, en plus de la rigidité précitée.

### Architectures respectivement testées pour les appuis selon l'invention:

- Un premier mode d'architecture préférentielle d'appui selon l'invention est illustré à la Fig. 3.

Comme cela a été indiqué précédemment d'une manière générale, en référence aux Figs. 1 et 2, un appui de sécurité 1 selon la Fig. 3 est du type comportant ladite base 2, ledit sommet 3 et ledit corps annulaire 4.

Est représenté à la Fig. 3 un élément de support 7 de cet appui 1 préférentiel qui est continu circonférentiellement, ledit élément de support comprenant une pluralité de cloisons 6 s'étendant axialement de part et d'autre du plan médian circonférentiel P de l'appui 1 et étant réparties sur la circonférence dudit appui 1.

On voit à la Fig. 3 que cet élément de support 7 comprend, en l'un desdits côtés de l'appui 1, des éléments de jonction 8 s'étendant sensiblement circonférentiellement. Chaque élément de jonction 8 relie entre elles les extrémités respectives 6a de deux cloisons 6 adjacentes qui sont disposées dudit côté de l'appui 1, et lesdits éléments de jonction 8 sont disposés successivement de façon alternée de part et d'autre desdites cloisons 6.

Plus précisément, les éléments de jonction 8 sont mutuellement épaulés, entre deux cloisons 6 adjacentes, par une nervure 8a s'étendant dudit sommet 3 à ladite base 2 de l'appui 1, de telle manière que lesdits éléments de jonction 8 forment une paroi de jonction continue 9 en forme de soufflet sur tout ledit côté dudit appui 1.

Plus précisément, ladite paroi de jonction 9 comporte une pluralité d'alvéoles 9a qui sont chacune délimitées par deux nervures 8a adjacentes. Le fond de chaque alvéole 9a présente sensiblement une forme de dièdre dont l'arête est formée par une extrémité 6a de cloison 6, et dont les faces sont respectivement formées par lesdits éléments de jonction 8 alternés.

Dans cet exemple préférentiel d'architecture testée, les cloisons 6 de l'appui 1 sont au nombre de 40 sur la circonférence dudit appui 1, elles présentent chacune une épaisseur de 8 mm, et elles sont distantes l'une de l'autre de 40 mm. Et comme cela a été dit ci-dessus pour chaque appui 1 testé, celui-ci présente une largeur de 135 mm, un diamètre de 440 mm et une hauteur de 50 mm.

De plus, la base 2 et le sommet 3 dudit appui 1 présentent des épaisseurs respectivement égales à 6 mm et 7 mm.

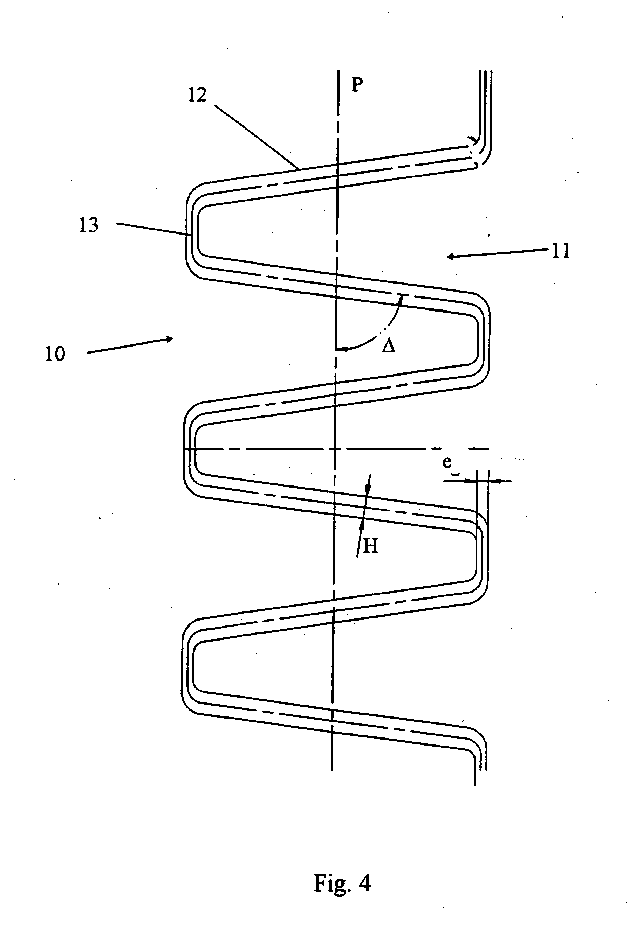

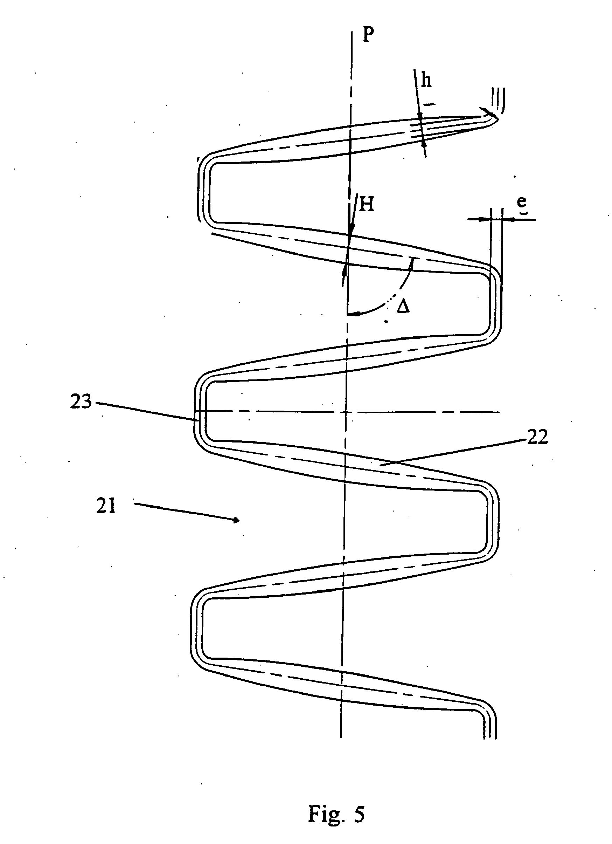

Par ailleurs, la distance dans la direction axiale entre un plan P', axialement médian pour lesdits éléments de jonction 8, et les extrémités libres respectives desdites nervures 8a, est égale à 20 mm dans cet exemple préférentiel.
- Un second mode d'architecture d'appui 1 selon l'invention est illustré à la Fig. 4, les Figs. 5 à 12 illustrant quant à elles des variantes de ce second mode (les éléments structurels analogues à ceux de la Fig. 4 sont identifiés ci-après par des références numériques qui sont augmentées de 10 à chaque Fig., cela à partir de la Fig. 5).

Comme dans ledit premier mode, les appuis 1 relatifs à ces Figs. 4 à 12 sont tous du type comportant ladite base 2, ledit sommet 3 et un corps annulaire 10.

* A la Fig. 4 est représenté un tel corps annulaire 10. Celui-ci est constitué d'un élément de support 11 continu circonférentiellement, qui comporte un ensemble de cloisons 12 reliées deux à deux par des éléments de jonction 13.

Les cloisons 12 s'étendent latéralement de part et d'autre du plan médian circonférentiel P de l'appui 1, et elles sont régulièrement réparties sur la circonférence dudit appui 1. Elles ont une inclinaison Δ, relativement à la direction circonférentielle, qui est proche de 90 degrés. Leur épaisseur H est constante. De plus, deux cloisons 12 adjacentes ont une inclinaison opposée relativement à la direction axiale.

Ces éléments de jonction 13 ont une épaisseur e, ils sont orientés circonférentiellement et relient chacun entre elles les extrémités respectives de deux cloisons 12 adjacentes qui sont disposées d'un même côté de l'appui 1 (ces deux extrémités sont les plus proches l'une de l'autre).

Les éléments de jonction 13 sont ainsi disposés successivement de façon alternée de part et d'autre des cloisons 12.

On notera que l'élément de support 11 ne comporte aucun élément en contre-dépouille, pour faciliter la fabrication de l'appui 1 avec un démoulage axial.

* A la Fig. 5 est représentée une variante de réalisation d'un élément de support 21, en référence à l'élément de support 11 de la Fig. 4.

Les cloisons 22 de cet élément de support 21 ont une épaisseur H, dans leur partie centrale, qui est supérieure à leur épaisseur h, à l'emplacement de leurs extrémités latérales. Dans cet exemple, H est environ deux fois plus grand que h.

Cette variation d'épaisseur donne aux parties centrales des cloisons 22 une très bonne résistance au flambement. Quant aux extrémités latérales, elles sont reliées aux éléments de jonction 23 de façon continue, ce qui leur confère une bonne résistance au flambement.

On notera qu'une variation d'épaisseur de 10 % peut déjà avoir des effets sensibles, en vue de repousser l'apparition de flambement en surcharge.

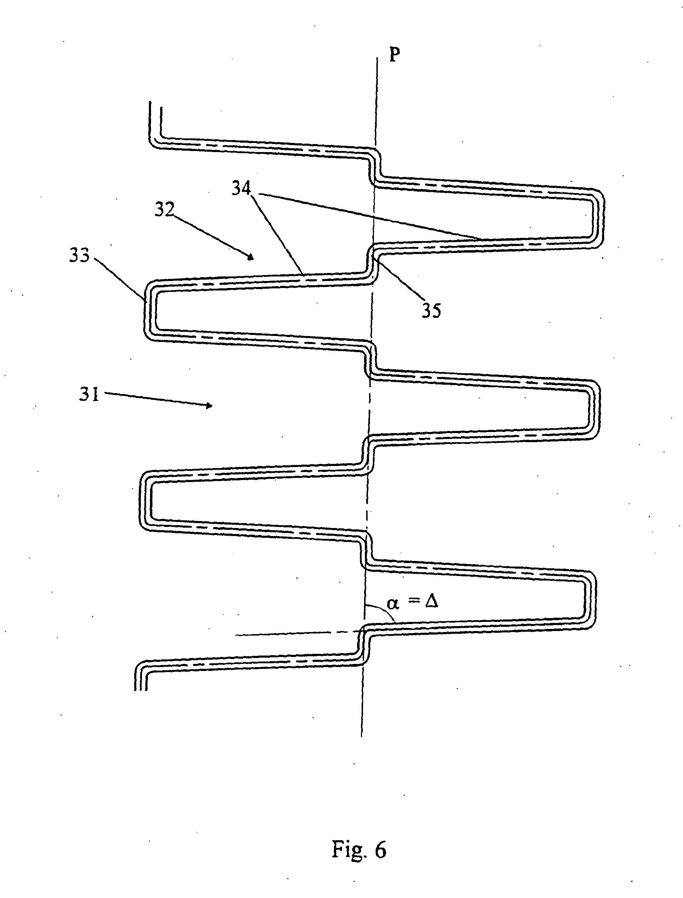

* A la Fig. 6 est représentée une autre variante de réalisation d'un élément de support 31.

Celui-ci comporte, comme précédemment, un ensemble de cloisons 32 qui sont reliées par des éléments de jonction 33. Les cloisons 32 comportent deux parties latérales 34 de même inclinaison Δ relativement à la direction circonférentielle, qui sont décalées circonférentiellement et qui sont reliées dans la partie centrale dudit élément de support 31 par une troisième partie 35 d'orientation sensiblement circonférentielle.

La variation α d'orientation moyenne entre les parties latérales 34 et la partie centrale 35 est ici de l'ordre de 80 degrés. Comme les parties 35 sont d'orientation circonférentielle, les angles α et Δ sont égaux.

La présence de cette troisième partie centrale 35, d'orientation moyenne très différente de celle des deux parties latérales, renforce la résistance au flambement de la partie centrale des cloisons 22.

On notera que cette variation α doit, pour être efficace, être supérieure à 20 degrés.

Dans cet exemple de réalisation, les cloisons 32 comportent, d'une extrémité latérale à l'autre, une inversion du sens de leur courbure.

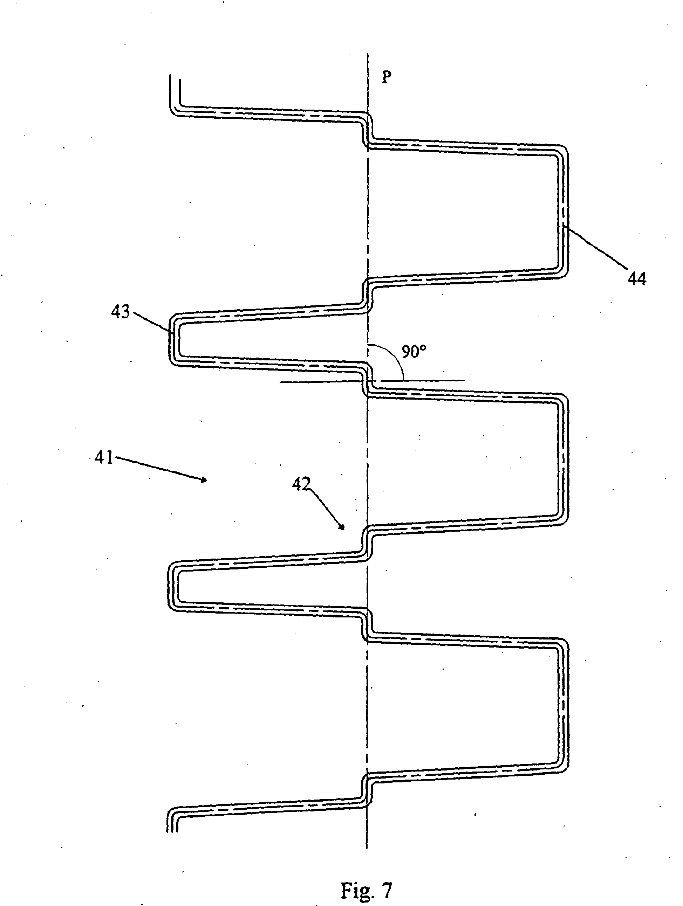

* A la Fig. 7 est représentée une autre variante de réalisation d'un élément de support 41.

Les éléments de jonction 43 qui sont disposés d'un côté de l'élément de support 41 ont ici une longueur circonférentielle qui est inférieure à celle des éléments de jonction 44, lesquels sont disposés de l'autre côté de l'élément de support 41.

On notera que la longueur sensiblement doublée des éléments de jonction 44 augmente la raideur en compression de l'élément de support 41, de ce côté de l'appui 1. Ce même côté est à disposer du côté intérieur du véhicule, là où les efforts subis par l'appui 1 en fonctionnement sont les plus importants.

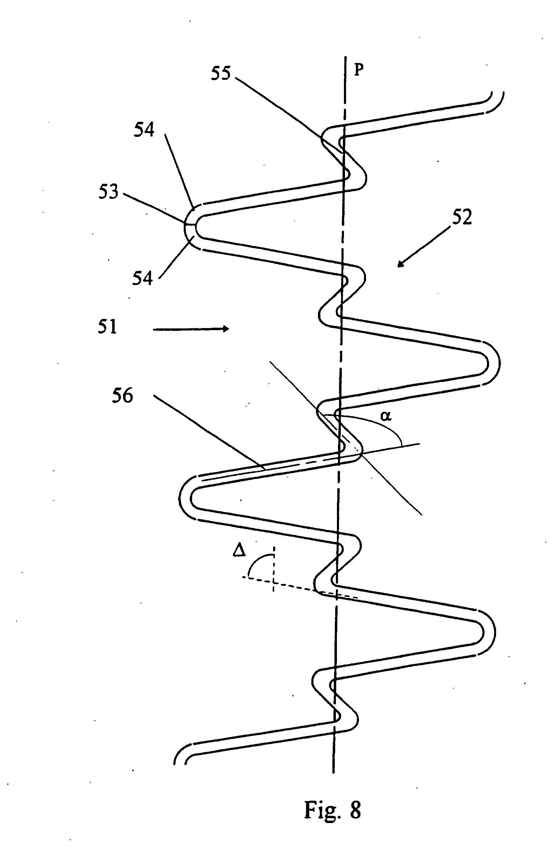

* A la Fig. 8 est représentée une autre variante de réalisation d'un élément de support 51.

Les éléments de jonction 53 sont ici pratiquement réduits à la surface de contact entre les deux extrémités latérales 54 en forme d'arc de cercle des cloisons 52.

Ces cloisons 52 comportent également une partie centrale de liaison 55.

On notera que la variation α d'orientation moyenne entre les deux parties latérales 56 et la partie centrale 55 est supérieure à 90 degrés et est de l'ordre de 110 degrés, ce qui augmente la densité moyenne d'appui de l'élément de support 51 dans sa partie centrale.

Ces cloisons 52 comportent, d'une extrémité latérale à l'autre, trois inversions de leur sens de courbure.

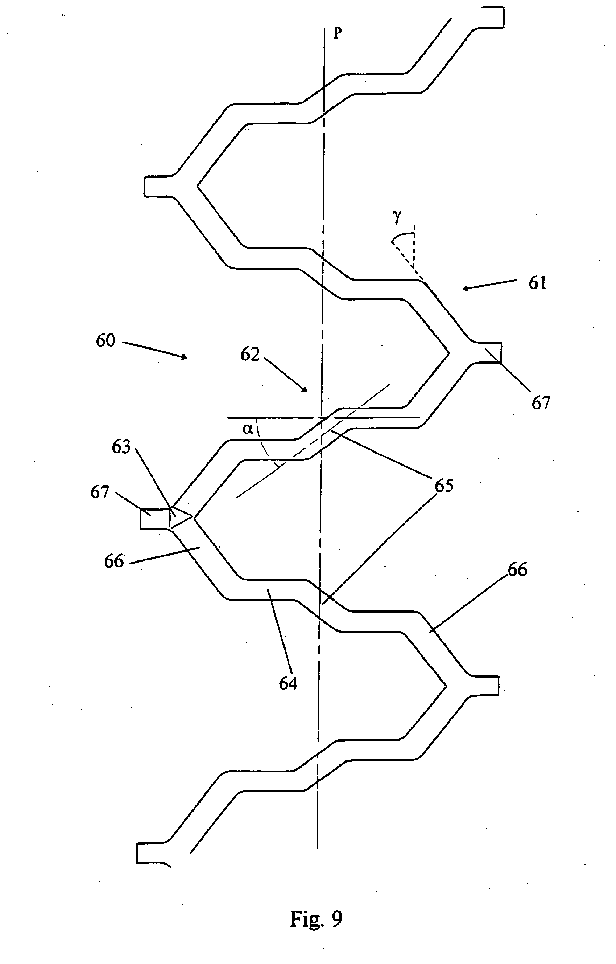

* A la Fig. 9 est représentée une autre variante de réalisation d'un élément de support 61, variante proche de celle de la Fig. 8 avec les modifications suivantes.

Les cloisons 62 comportent des segments rectilignes et présentent trois inversions de leur sens de courbure. Elles comprennent deux parties latérales d'orientation axiale 64, qui sont reliées, d'une part, entre elles par une partie centrale 65 et, d'autre part, aux éléments de jonction 63 par des extrémités latérales 66 d'orientation moyenne γ proche de 30 degrés, par rapport à la direction circonférentielle.

La variation α d'orientation moyenne qui existe entre les deux parties d'orientation axiale 64 des cloisons 62 et la partie centrale de jonction 65 est de l'ordre de 40 degrés.

Les éléments de jonction 63 peuvent être ici définis comme étant des éléments de section sensiblement triangulaire, qui sont disposés entre deux extrémités latérales 66 adjacentes.

Des deux côtés de l'élément de support 61, le corps annulaire 60 comprend un ensemble de parois d'orientation sensiblement axiale 67 qui prolonge chaque élément de jonction 63 vers l'extérieur de l'appui 1. Comme cela est visible sur cette Fig. 9, la réunion de chaque élément de jonction 63, desdites extrémités latérales adjacentes 66 et de ladite paroi axiale 67 forme ainsi une étoile à trois branches, laquelle est très résistante au flambement.

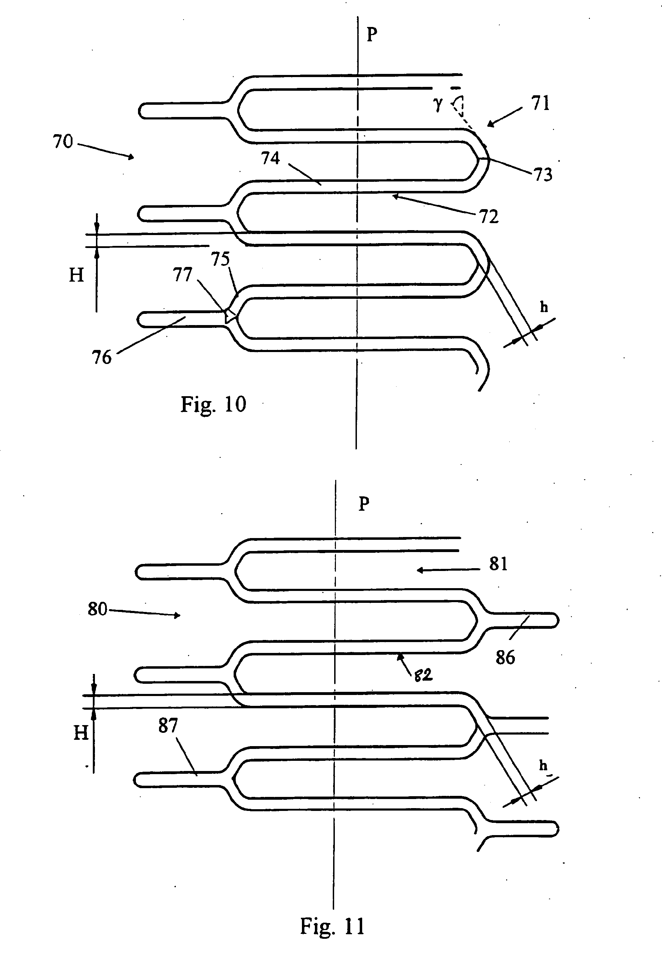

* A la Fig. 10 est représentée une autre variante de réalisation d'un corps annulaire 70 et, par conséquent, d'un élément de support 71.

Ce dernier comprend des cloisons 72 avec des parties centrales 74 d'orientation axiale qui sont prolongées de part et d'autre par une extrémité latérale 75, laquelle présente une orientation γ proche de 30 degrés par rapport à la direction circonférentielle.

Les éléments de jonction 73 sont, d'un côté du corps annulaire 70, réduits à la surface de contact entre les deux extrémités latérales 75 adjacentes. De l'autre côté, le corps annulaire 70 comporte des parois latérales 76 qui épaulent de ce côté les éléments de jonction 77, lesquels présentent une forme sensiblement triangulaire.

On notera qu'en ce dernier côté, la raideur en compression de l'élément de support est supérieure.

La longueur des parois latérales 76 est notablement inférieure à la moitié de la longueur des parties centrales 74 des cloisons 72, pour qu'elles ne soient pas susceptibles de flamber.

De préférence, le côté de l'élément de support 71 dont la raideur en compression radiale est la plus élevée est à disposer du côté intérieur du véhicule. En effet, on a constaté que les efforts sont les plus élevés de ce côté intérieur du véhicule.

Les cloisons 72 ont une épaisseur H dans leur partie centrale 74 qui est supérieure à l'épaisseur h de leurs parties latérales 75, de manière à renforcer la résistance au flambement de cette partie centrale 74.

* A la Fig. 11 est représentée une autre variante de réalisation d'un corps annulaire 80, variante très proche dudit corps annulaire 70 de la Fig. 10.

Ce corps annulaire 80 comporte des parois latérales axiales 86 et 87 qui épaulent des deux côtés l'élément de support 81, lequel est également structurellement très proche dudit élément de support 71.

Pour une largeur donnée de corps annulaire 80, ces parois latérales 86 et 87 présentent l'avantage de réduire la largeur axiale des cloisons 82 de l'élément de support continu 81, et ainsi d'améliorer la résistance au flambement de l'ensemble de la structure. Les longueurs axiales desdites parois 86 et 87 peuvent être différentes, comme illustré à la Fig. 11.

* A la Fig. 12 est représentée une vue axiale d'un appui 1 incluant un élément de support 91 tel que décrit à la Fig. 11, mais comportant en plus un voile circonférentiel 94 continu qui est disposé à mi-hauteur du corps annulaire 90. Ce voile circonférentiel 94, de forme cylindrique, présente l'avantage de procurer une augmentation très sensible, de l'ordre d'un facteur quatre, de la charge limite de flambement de la structure de l'appui 1.

Chacun des appuis 1 décrits en référence aux Figs. 4 à 12 présente les caractéristiques dimensionnelles suivantes.

Les cloisons 12, ..., 92 sont au nombre de 40 sur la circonférence de chaque appui 1, elles présentent chacune une épaisseur de 8 mm, et elles sont distantes l'une de l'autre de 40 mm. Et comme cela a été dit ci-dessus pour chaque appui 1 testé, celui-ci présente une largeur de 135 mm, un diamètre de 440 mm et une hauteur de 50 mm.

De plus, la base 2 et le sommet 3 dudit appui 1 présentent des épaisseurs respectivement égales à 6 mm et 7 mm.

Tous les éléments de support 7, 11, ..., 91 et les corps annulaires 4, 10, ..., 90 présentés ci-dessus sont réalisables par des techniques de moulage. De préférence, ils ne comportent aucune partie en contre dépouille pour faciliter un démoulage axial.

On notera que l'on pourrait également utiliser, à titre d'architecture d'appuis selon l'invention, un appui constitué de plusieurs anneaux reliés entre eux dans la direction axiale dudit appui, sa structure globale étant inchangée.

On pourrait par exemple prévoir pour un tel appui un premier anneau de section axiale sensiblement rectangulaire, et un ou plusieurs éléments annulaires présentant une pluralité d'évidements et s'étendant sensiblement axialement sur toutes leurs largeurs et sensiblement régulièrement répartis sur leurs circonférences.

Un tel appui à anneaux est plus aisé à introduire dans un pneumatique, en raison de la rigidité en flexion inférieure de ses différents éléments annulaires.

## Revendications

1. Composition de caoutchouc comportant
(pce: parties en poids pour 100 parties d'élastomère(s) diénique(s)):
- du caoutchouc naturel ou du polyisoprène synthétique, selon une quantité égale ou supérieure à 60 pce,
- plus de 60 pce d'une charge blanche renforçante, et **caractérisée en ce qu'**elle comporte
de 3 à 8 pce de soufre.

2. Composition de caoutchouc selon la revendication 1, **caractérisée en ce que** ladite charge blanche renforçante est constituée de silice, selon une quantité comprise entre 60 et 80 pce.

3. Composition de caoutchouc selon la revendication 1 ou 2, **caractérisée en ce que** ladite silice présente des valeurs de surface BET ou CTAB appartenant toutes deux à un domaine allant de 50 m²/g à 200 m²/g.

4. Composition de caoutchouc selon la revendication 3, **caractérisée en ce que** ladite silice présente des valeurs de surface BET ou CTAB appartenant toutes deux à un domaine allant de 110 m²/g à 200 m²/g.

5. Composition de caoutchouc selon une des revendications précédentes, **caractérisée en ce qu'**elle comprend un agent de liaison charge blanche renforçante / élastomère(s) qui est de type alkoxysilane polysulfuré.

6. Composition de caoutchouc selon une des revendications précédentes, **caractérisée en ce qu'**elle comprend également, selon une quantité égale ou inférieure à 40 pce, un homopolymère obtenu par polymérisation d'un monomère diène conjugué ayant de 4 à 12 atomes de carbone, ou un copolymère obtenu par copolymérisation d'un ou plusieurs diènes conjugués entre eux ou avec un ou plusieurs composés vinylaromatiques ayant de 8 à 20 atomes de carbone.

7. Composition de caoutchouc selon la revendication 6, **caractérisée en ce qu'**elle comprend un coupage de caoutchouc naturel et de polybutadiène.

8. Composition de caoutchouc selon une des revendications 1 à 5, **caractérisée en ce qu'**elle comprend un seul élastomère diénique constitué de caoutchouc naturel ou de polyisoprène synthétique.

9. Composition de caoutchouc selon une des revendications précédentes, **caractérisée en ce qu'**elle présente un module d'élasticité M10 à 10% de déformation qui est supérieur à 10 MPa.

10. Appui de sécurité (1) destiné à être monté sur une jante de roue à l'intérieur d'une enveloppe de pneumatique pour véhicule, de manière à pouvoir supporter une bande de roulement de ladite enveloppe en cas de chute de pression de gonflage, **caractérisé en ce que** ledit appui (1) est constitué d'une composition de caoutchouc vulcanisée selon une des revendications précédentes.

11. Appui de sécurité (1) selon la revendication 10, du type comportant:
- une base (2) sensiblement cylindrique destinée à s'adapter autour de ladite jante,
- un sommet (3) sensiblement cylindrique destiné à entrer en contact avec ladite bande de roulement en cas de chute de pression, et laissant une garde par rapport à ladite bande à la pression nominale, et
- un corps annulaire (4) reliant ladite base (2) et ledit sommet (3) entre eux, ledit corps (4) comportant un élément de support (7) continu circonférentiellement avec un plan médian circonférentiel (P), ledit élément de support (7) comprenant:
• une pluralité de cloisons (6) s'étendant axialement de part et d'autre dudit plan médian circonférentiel (P) et réparties sur la circonférence dudit appui (1);
• des éléments de jonction (8) s'étendant sensiblement circonférentiellement en l'un desdits côtés de l'appui (1), chaque élément de jonction reliant entre elles les extrémités respectives (6a) de deux cloisons (6) adjacentes qui sont disposées dudit côté de l'appui (1), lesdits éléments de jonction (8) étant disposés successivement de façon alternée de part et d'autre desdites cloisons (6),
**caractérisé en ce que,** entre deux cloisons (6) adjacentes, lesdits éléments de jonction (8) sont mutuellement épaulés par une nervure (8a) s'étendant dudit sommet (3) à ladite base (2) de l'appui (1), de telle manière que lesdits éléments de jonction (8) forment une paroi de jonction continue (9) en forme de soufflet sur tout ledit côté dudit appui (1).

12. Appui de sécurité (1) selon la revendication 11, **caractérisé en ce que** ladite paroi continue (9) comporte une pluralité d'alvéoles (9a) qui sont chacune délimitées par deux nervures (8a) adjacentes, le fond de chaque alvéole (9a) présentant sensiblement une forme de dièdre dont l'arête est formée par l'une desdites cloisons (6) et dont les faces sont respectivement formées par lesdits éléments de jonction (8) alternés.

13. Appui de sécurité (1) selon la revendication 10, du type comportant:
- une base (2) sensiblement cylindrique destinée à s'adapter autour de ladite jante,
- un sommet (3) sensiblement cylindrique destiné à entrer en contact avec ladite bande de roulement en cas de chute de pression, et laissant une garde par rapport à ladite bande à la pression nominale, et
- un corps annulaire (10) reliant ladite base (2) et ledit sommet (3) entre eux, ledit corps (10) comportant un élément de support (11,..., 91) continu circonférentiellement avec un plan médian circonférentiel (P), ledit élément de support (11,..., 91) comprenant:
• une pluralité de cloisons (12,..., 92) s'étendant axialement de part et d'autre dudit plan médian circonférentiel (P) et réparties sur la circonférence dudit appui (1), et
• des éléments de jonction (13,..., 93) s'étendant sensiblement circonférentiellement, chaque élément de jonction (13,..., 93) reliant entre elles les extrémités respectives de deux cloisons (12,..., 92) adjacentes qui sont disposées d'un même côté de l'appui (1), lesdits éléments de jonction (13,..., 93) étant disposés successivement de façon alternée de part et d'autre desdites cloisons (12,..., 92),
**caractérisé en ce que** lesdites cloisons (12,..., 92) sont adaptées dans leur partie centrale relativement à leurs extrémités latérales pour renforcer la résistance à un flambement sous un chargement radial dudit corps annulaire (10).

14. Appui de sécurité (1) selon la revendication 13, **caractérisé en ce que** le rapport entre l'épaisseur desdites cloisons (22, 72) dans leur partie centrale et leurs extrémités latérales est supérieur à 1,1.

15. Appui de sécurité (1) selon la revendication 13 ou 14, **caractérisé en ce que** lesdites cloisons (32) présentent, d'une extrémité latérale à l'autre, au moins une inversion du sens de leur courbure.

16. Appui de sécurité (1) selon la revendication 15, **caractérisé en ce que** lesdites cloisons (62) présentent une partie centrale (65) s'étendant sensiblement axialement entre deux parties latérales (64), lesdites parties latérales rejoignant les éléments de jonction (63) en faisant avec la direction circonférentielle un angle γ allant de 20 à 40 degrés.

17. Appui de sécurité (1) selon l'une des revendications 13 à 16, **caractérisé en ce que** lesdites cloisons (52) présentent, d'une extrémité latérale à l'autre, au moins trois inversions du sens de leur courbure.

18. Appui de sécurité (1) selon l'une des revendications 15 à 17, **caractérisé en ce que** lesdites cloisons (32) présentent, dans leur zone centrale, deux parties (34) s'étendant sensiblement axialement et décalées circonférentiellement l'une par rapport à l'autre, ainsi qu'une troisième partie (35) de jonction.

19. Appui de sécurité (1) selon l'une des revendications 13 à 18, **caractérisé en ce que,** d'un côté au moins dudit élément de support (61, 81, 91), chaque élément de jonction est épaulé par au moins une paroi (67, 87) s'étendant sensiblement axialement vers l'extérieur dudit corps annulaire.

20. Appui de sécurité (1) selon la revendication 19, **caractérisé en ce que** chaque élément de jonction (63) forme avec une paroi axiale (67) qui l'épaule et les extrémités latérales (66) des deux cloisons (62) adjacentes un ensemble en forme d'étoile à trois branches.

21. Appui de sécurité (1) selon l'une des revendications 13 à 20, **caractérisé en ce que** l'élément de support (91) comporte en plus, un voile (94) sensiblement cylindrique coaxial avec l'appui (1) qui est disposé radialement à mi-hauteur dudit élément de support (91).

22. Appui de sécurité (1) selon l'une des revendications 13 à 21, **caractérisé en ce que** l'élément de support (11) est adapté pour ne comprendre aucune partie en contre-dépouille s'opposant à un démoulage axial de l'appui (1).

23. Ensemble monté pour véhicule automobile comportant une jante de roue, une enveloppe de pneumatique montée sur ladite jante et un appui de sécurité (1) monté sur ladite jante à l'intérieur de ladite enveloppe de manière à pouvoir supporter une bande de roulement de ladite enveloppe en cas de chute de pression de gonflage, ladite jante comportant en chacun de ses deux bords périphériques un siège de jante destiné à recevoir un bourrelet de ladite enveloppe, ladite jante comportant entre ses deux sièges, d'une part, une portée et, d'autre part, une gorge de montage reliant ladite portée à un rebord axialement interne de l'un desdits sièges, ou premier siège, **caractérisé en ce que** ledit appui (1) est tel que défini à l'une des revendications 10 à 22.

## Claims

1. A rubber composition comprising (phr: parts by weight per 100 parts of diene elastomer(s)):
- natural rubber or synthetic polyisoprene in a quantity of greater than or equal to 60 phr,
- more than 60 phr of a reinforcing white filler, and **characterised in that** said composition comprises from 3 to 8 phr of sulphur.

2. A rubber composition according to claim 1, **characterised in that** said reinforcing white filler consists of silica in a quantity ranging from 60 to 80 phr.

3. A rubber composition according to claim 1 or 2, **characterised in that** said silica exhibits BET or CTAB surface area values which are both in a range from 50 m²/g to 200 m²/g.

4. A rubber composition according to claim 3, **characterised in that** said silica exhibits BET or CTAB surface area values which are both in a range from 110 m²/g to 200 m²/g.

5. A rubber composition according to one of the preceding claims, **characterised in that** it comprises a reinforcing white filler/elastomer bonding agent which is of the polysulphurised alkoxysilane type.

6. A rubber composition according to one of the preceding claims, **characterised in that** it also comprises a homopolymer obtained by polymerisation of a conjugated diene monomer having 4 to 12 carbon atoms, or a copolymer obtained by copolymerisation of one or more conjugated dienes with each other or with one or more vinyl aromatic compounds having from 8 to 20 carbon atoms, in a quantity of less than or equal to 40 phr.

7. A rubber composition according to claim 6, **characterised in that** it comprises a blend of natural rubber and polybutadiene.

8. A rubber composition according to one of claims 1 to 5, **characterised in that** it comprises a single diene elastomer consisting of natural rubber or synthetic polyisoprene.

9. A rubber composition according to one of the preceding claims, **characterised in that** it exhibits an M10 elasticity modulus at 10% deformation which is greater than 10 MPa.

10. A safety support (1) intended to be mounted on a wheel rim inside a vehicle tyre, so as to be capable of supporting a tread of said tyre in the event of a drop in inflation pressure, **characterised in that** said support (1) consists of a vulcanised rubber composition according to one of the preceding claims.

11. A safety support (1) according to claim 10, of the type comprising:
- a substantially cylindrical base (2), intended to conform to the said rim,
- a substantially cylindrical crown (3) intended to come into contact with the tyre tread in the event of a drop in pressure and to leave a clearance relative to said tread at nominal pressure, and
- an annular body (4) connecting said base (2) and said crown (3) together, said body (4) comprising a circumferentially continuous supporting element (7) with a circumferential median plane (P), said supporting element (7) comprising:
• a plurality of partitions (6) extending axially on each side of said circumferential median plane (P) and distributed around the circumference of said support (1),
• joining elements (8) extending substantially circumferentially on one of said sides of the support (1), each joining element connecting the respective ends (6a) of two adjacent partitions (6) which are arranged on the said side of the support (1), said joining elements (8) being arranged alternately in succession on each side of said partitions (6),
**characterised in that,** between two adjacent partitions (6), said joining elements (8) are mutually supported by a rib (8a) extending from said crown (3) to said base (2) of the support (1), such that said joining elements (8) form a continuous joining wall (9) in the form of a gusset all along said side of said support (1).

12. A safety support (1) according to claim 11, **characterised in that** said continuous wall (9) comprises a plurality of cells (9a), each of which is delimited by two adjacent ribs (8a), the bottom of each cell (9a) substantially exhibiting a dihedral shape, the ridge of which is formed by one of said partitions (6) and the faces of which are respectively formed by said alternate joining elements (8).

13. A safety support (1) according to claim 10, of the type comprising:
- a substantially cylindrical base (2), intended to conform to the said rim,
- a substantially cylindrical crown (3) intended to come into contact with the tyre tread in the event of a drop in pressure and to leave a clearance relative to said tread at nominal pressure, and
- an annular body (10) connecting said base (2) and said crown (3) together, said body (10) comprising a circumferentially continuous supporting element (11, ..., 91) with a circumferential median plane (P), said supporting element (11, ..., 91) comprising:
• a plurality of partitions (12, ..., 92) extending axially on each side of said circumferential median plane (P) and distributed around the circumference of said support (1), and
• joining elements (13, ..., 93) extending substantially circumferentially, each joining element (13, ..., 93) connecting the respective ends of two adjacent partitions (12, ..., 92) which are arranged on the same side of the support (1), said joining elements (13, ..., 93) being arranged alternately in succession on each side of said partitions (12,..., 92),
**characterised in that** said partitions (12, ..., 92) are modified in the central portion thereof relative to the lateral ends thereof such as to increase the buckling resistance of the annular body (10) under radial load.

14. A safety support (1) according to claim 13, **characterised in that** the ratio between the thickness of said partitions (22, 72) in the central portion thereof and the lateral ends thereof is greater than 1.1.

15. A safety support (1) according to claim 13 or 14, **characterised in that,** from one lateral end to the other, said partitions (32) exhibit at least one reversal in the direction of the curvature thereof.

16. A safety support (1) according to claim 15, **characterised in that** said partitions (62) exhibit a central portion (65) extending substantially axially between two lateral portions (64), said lateral portions meeting the joining elements (63) and forming an angle γ with the circumferential direction ranging from 20 to 40 degrees.

17. A safety support (1) according to one of claims 13 to 16, **characterised in that** said partitions (52) exhibit, from one lateral end to the other, at least three reversals in the direction of the curvature thereof.

18. A safety support (1) according to one of claims 15 to 17, **characterised in that** said partitions (32) exhibit, in the central zone thereof, two portions (34) extending substantially axially and offset circumferentially relative to each other, together with a third joining portion (35).

19. A safety support (1) according to one of claims 13 to 18, **characterised in that,** on at least one side of said supporting element (61, 81, 91), each joining element is supported by at least one wall (67, 87) extending substantially axially towards the outside of said annular body.

20. A safety support (1) according to claim 19, **characterised in that** each joining element (63) forms with a supporting axial wall (67) and the lateral ends (66) of the two adjacent partitions (62) a three-branched star structure.

21. A safety support (1) according to one of claims 13 to 20, **characterised in that** the supporting element (91) additionally comprises a web (94) which is substantially cylindrical and coaxial with the support (1), which web is arranged radially at half height of said supporting element (91).

22. A safety support (1) according to one of claims 13 to 21, **characterised in that** the supporting element (11) is adjusted so as to comprise no undercut portions obstructing axial demoulding of the support (1).

23. A mounted assembly for a motor vehicle comprising a wheel rim, a tyre mounted on said rim and a safety support (1) mounted on said rim inside said tyre so as to be capable of supporting a tread of said tyre in the event of a drop in inflation pressure, said rim comprising on each of the peripheral edges thereof a rim seat intended to receive a bead of said tyre, said rim comprising between the two seats thereof, on the one hand, a bearing surface and, on the other, a mounting groove connecting said bearing surface to an axially internal lip of one of said seats, or first seat, **characterised in that** said support (1) is as defined in one of claims 10 to 22.

## Patentansprüche

1. Kautschukzusammensetzung, umfassend (phr: Gewichtsanteile je 100 Teile Dienelastomer(e)):
- Naturkautschuk oder synthetisches Polyisopren gemäß einer Menge gleich oder größer als 60 phr,
- mehr als 60 phr eines weißen verstärkenden Füllstoffs, und **dadurch gekennzeichnet, dass** sie
3 bis 8 phr Schwefel umfasst.

2. Kautschukzusammensetzung nach Anspruch 1, **dadurch gekennzeichnet, dass** der weiße verstärkende Füllstoff aus Siliciumdioxid besteht, gemäß einer Menge im Bereich zwischen 60 und 80 phr.

3. Kautschukzusammensetzung nach Anspruch 1 oder 2, **dadurch gekennzeichnet, dass** das Siliciumdioxid Werte für die BET- oder CTAB-Oberfläche aufweist, die beide zu einem Bereich gehören, der zwischen 50 m²/g und 200 m²/g liegt.

4. Kautschukzusammensetzung nach Anspruch 3, **dadurch gekennzeichnet, dass** das Siliciumdioxid Werte für die BET- oder CTAB-Oberfläche aufweist, die beide zu einem Bereich gehören, der zwischen 110 m²/g und 200 m²/g liegt.

5. Kautschukzusammensetzung nach einem der vorhergehenden Ansprüche, **dadurch gekennzeichnet, dass** sie ein Kopplungsmittel für den weißen verstärkenden Füllstoff/Elastomere(e) umfasst, das vom Typ polysulfuriertes Alkoxysilan ist.

6. Kautschukzusammensetzung nach einem der vorhergehenden Ansprüche, **dadurch gekennzeichnet, dass** sie außerdem, gemäß einer Menge gleich oder kleiner als 40 phr, ein Homopolymer, das durch Polymerisation eines konjugierten Dienmonomers erhalten wird, das 4 bis 12 Kohlenstoffatome aufweist, oder ein Copolymer, das durch Copolymerisation eines oder mehrerer konjugierter Diene untereinander oder mit einem oder mehreren aromatischen Vinylverbindungen erhalten wird, die 8 bis 20 Kohlenstoffatome aufweisen.

7. Kautschukzusammensetzung nach Anspruch 6, **dadurch gekennzeichnet, dass** sie einen Naturkautschuk- und Polybutadienschnitt umfasst.

8. Kautschukzusammensetzung nach einem der Ansprüche 1 bis 5, **dadurch gekennzeichnet, dass** sie ein einziges Dienelastomer umfasst, das aus Naturkautschuk oder synthetischem Polyisopren besteht.

9. Kautschukzusammensetzung nach einem der vorhergehenden Ansprüche, **dadurch gekennzeichnet, dass** sie ein Elastizitätsmodul M10 bei 10 % Deformation aufweist, das größer als 10 MPa ist.

10. Notlaufstütze (1), die dazu dient, auf eine Radfelge im Innern eines Fahrzeugreifenmantels montiert zu werden, um eine Lauffläche des Mantels im Falle eines Reifendruckverlusts tragen zu können, **dadurch gekennzeichnet, dass** die Stütze
(1) aus einer vulkanisierten Kautschukzusammensetzung nach einem der vorhergehenden Ansprüche besteht.

11. Notlaufstütze (1) nach Anspruch 10, des Typs, umfassend:
- eine im Wesentlichen zylindrische Basis (2), die dazu dient, sich um die Felge herum einzupassen,
- eine im Wesentlichen zylindrische obere Lage (3), die dazu dient, im Fall eines Druckverlusts mit der Lauffläche in Kontakt zu kommen, und die bei Nenndruck einen Abstand bezüglich der Lauffläche lässt, und
- einen ringförmiger Körper (4), der die Basis (2) und die obere Lage (3) miteinander verbindet, wobei der Körper (4) ein kontinuierlich umlaufendes Trägerelement (7) mit einer umlaufenden Mittelebene (P) umfasst, wobei das Trägerelement (7) umfasst:
• eine Vielzahl von Trennwänden (6), die sich axial auf beiden Seiten der umlaufenden Mittelebene (P) erstrecken und auf der Umfangslänge des Trägers (1) verteilt sind,
• Verbindungselemente (8), die sich im Wesentlichen in Umfangsrichtung in eine der Seiten des Trägers (1) erstrecken, wobei jedes Verbindungselement die jeweiligen Enden (6a) von zwei benachbarten Trennwänden (6) miteinander verbindet, die an der Seite des Trägers (1) angeordnet sind, wobei die Verbindungselemente (8) hintereinander abwechselnd auf beiden Seiten der Trennwände (6) angeordnet sind,
**dadurch gekennzeichnet, dass,** zwischen zwei benachbarten Trennwänden (6), die Verbindungselemente (8) so gegenseitig an einer Rippe (8a), die sich von der oberen Lage (3) bis zur Basis (2) des Trägers (1) erstreckt, anliegen, dass die Verbindungselemente (8) eine kontinuierliche Verbindungswand (9) in Form eines Balgs über die gesamte Seite des Trägers (1) bilden.

12. Notlaufstütze (1) nach Anspruch 11, **dadurch gekennzeichnet, dass** die kontinuierliche Wand (9) eine Vielzahl von Waben (9a) umfasst, die jeweils durch zwei benachbarte Rippen (8a) begrenzt sind, wobei der Boden jeder Wabe (9a) im Wesentlichen eine Diederform aufweist, deren Grat durch eine der Trennwände (6) geformt wird und deren Seitenflächen jeweils durch die sich abwechselnden Verbindungselemente (8) gebildet sind.

13. Notlaufstütze (1) nach Anspruch 10, des Typs, umfassend:
- eine im Wesentlichen zylindrische Basis (2), die dazu dient, sich um die Felge herum einzupassen,
- eine im Wesentlichen zylindrische obere Lage (3), die dazu dient, im Fall eines Druckverlusts mit der Lauffläche in Kontakt zu kommen, und die bei Nenndruck einen Abstand bezüglich der Lauffläche lässt, und
- einen ringförmigen Körper (10), der die Basis (2) und die obere Lage (3) miteinander verbindet, wobei der Körper (10) ein kontinuierlich umlaufendes Trägerelement (11, ..., 91) mit einer umlaufenden Mittelebene (P) umfasst, wobei das Trägerelement (11, ..., 91) umfasst:
• eine Vielzahl von Trennwänden (12, ..., 92), die sich axial auf beiden Seiten der umlaufenden Mittelebene (P) erstrecken und auf der Umfangslänge des Trägers (1) verteilt sind, und
• Verbindungselemente (13, ..., 93), die sich im Wesentlichen in Umlaufrichtung erstrecken, wobei jedes Verbindungselement (13, ..., 93) die jeweiligen Enden von zwei benachbarten Trennwänden (12, ..., 92) miteinander verbindet, die auf einer gleichen Seite des Trägers (1) angeordnet sind, wobei die Verbindungselemente (13, ..., 93) die hintereinander abwechselnd auf beiden Seiten der Trennwände (12, ..., 92) angeordnet sind,
**dadurch gekennzeichnet, dass** die Trennwände (12, ..., 92) in ihrem Mittelteil relativ zu ihren seitlichen Enden angepasst sind, um die Knickfestigkeit unter einer radialen Belastung des ringförmigen Körpers (10) zu verstärken.

14. Notlaufstütze (1) nach Anspruch 13, **dadurch gekennzeichnet, dass** das Verhältnis zwischen der Dicke der Trennwände (22, 72) in ihrem Mittelteil und ihren seitlichen Enden größer als 1,1 ist.

15. Notlaufstütze (1) nach Anspruch 13 oder 14, **dadurch gekennzeichnet, dass** die Trennwände (32) von einem seitlichen Ende zum anderen mindestens eine Richtungsumkehrung ihrer Krümmung aufweisen.

16. Notlaufstütze (1) nach Anspruch 15, **dadurch gekennzeichnet, dass** die Trennwände (62) einen Mittelteil (65) aufweisen, der sich im Wesentlichen axial zwischen zwei seitlichen Teilen (64) erstreckt, wobei die seitlichen Teile auf die Verbindungselemente (63) treffen, indem sie mit der Umlaufrichtung einen Winkel γ bilden, der zwischen 20 und 40 Grad liegt.

17. Notlaufstütze (1) nach einem der Ansprüche 13 bis 16, **dadurch gekennzeichnet, dass** die Trennwände (52) von einem seitlichen Ende zum anderen mindestens drei Richtungsumkehrungen ihrer Krümmung aufweisen.

18. Notlaufstütze (1) nach einem der Ansprüche 15 bis 17, **dadurch gekennzeichnet, dass** die Trennwände (32) in ihrem Mittelbereich zwei Teile (34), die sich im Wesentlichen axial und umlaufend voneinander beabstandet erstrecken, sowie einen dritten Verbindungsteil (35) aufweisen.

19. Notlaufstütze (1) nach einem der Ansprüche 13 bis 18, **dadurch gekennzeichnet, dass** mindestens an einer Seite des Trägerelements (61, 81, 91) jedes Verbindungselement an mindestens einer Wand (67, 87) anliegt, die sich im Wesentlichen axial zum Äußeren des ringförmigen Körpers erstreckt.

20. Notlaufstütze (1) nach Anspruch 19, **dadurch gekennzeichnet, dass** jedes Verbindungselement (63) mit einer axialen Wand (67), an der es anliegt, und den seitlichen Enden (66) der beiden benachbarten Trennwände (62) eine Gruppe in Form eines Sterns mit drei Zacken bildet.

21. Notlaufstütze (1) nach einem der Ansprüche 13 bis 20, **dadurch gekennzeichnet, dass** das Trägerelement (91) ferner einen im Wesentlichen zylindrischen Steg (94) umfasst, der im Wesentlichen koaxial zur Stütze (1) ist, der radial auf halber Höhe des Trägerelements (91) angeordnet ist.

22. Notlaufstütze (1) nach einem der Ansprüche 13 bis 21, **dadurch gekennzeichnet, dass** das Trägerelement (11) so angepasst ist, dass es kein Hinterschneidungsteil umfasst, das der axialen Formentnahme der Stütze (1) entgegensteht.

23. Baugruppe für ein Kraftfahrzeug, die eine Radfelge, einen Reifenmantel, der auf die Felge montiert ist, und eine Notlaufstütze (1) umfasst, die auf die Felge im Innern des Mantels montiert ist, um eine Lauffläche des Mantels im Falle eines Reifendruckverlusts tragen zu können, wobei die Felge an jedem ihrer zwei umlaufenden Ränder einen Felgensitz umfasst, der dazu dient, einen Wulst des Mantels aufzunehmen, wobei die Felge zwischen diesen beiden Sitzen einerseits eine Auflagefläche und andererseits eine Montagenut umfasst, die die Auflagefläche mit einer axial inneren Randleiste eines der Sitze oder ersten Sitz verbindet, **dadurch gekennzeichnet, dass** die Stütze (1) ist, wie in einem der Ansprüche 10 bis 22 definiert.
